# Europäisches Patentamt
# European Patent Office
# Office européen des brevets

(11) Veröffentlichungsnummer: **0 433 574 B1**

(12) **EUROPÄISCHE PATENTSCHRIFT**

(45) Veröffentlichungstag der Patentschrift: **17.08.94**

(51) Int. Cl.⁵: **C09D 5/00**

(21) Anmeldenummer: **90118226.1**

(22) Anmeldetag: **22.09.90**

Die Akte enthält technische Angaben, die nach dem Eingang der Anmeldung eingereicht wurden und die nicht in dieser Patentschrift enthalten sind.

(54) **Temporärer Schutzüberzug.**

(30) Priorität: **20.12.89 DE 3942113**

(43) Veröffentlichungstag der Anmeldung:
**26.06.91 Patentblatt 91/26**

(45) Bekanntmachung des Hinweises auf die
Patenterteilung:
**17.08.94 Patentblatt 94/33**

(84) Benannte Vertragsstaaten:
**BE DE ES FR GB IT NL SE**

(56) Entgegenhaltungen:
**US-A- 2 563 499**
**US-A- 4 347 266**
**US-A- 4 450 095**

**DATABASE WPI, abs.no.74-29766v, Derwent Publications Ltd, london, GB; & JP-B-49 011 846**

(73) Patentinhaber: **Caramba Chemie GmbH**
**Wanheimer Strasse 334/6**
**D-47055 Duisburg (DE)**

(72) Erfinder: **Otte, Wilfried**
**Moerser Strasse 291**
**D-4100 Duisburg 17 (DE)**
Erfinder: **Hansen, Claudia**
**Gewerkschaftsstrasse 9**
**D-4200 Oberhausen 1 (DE)**
Erfinder: **Menzel, Horst, Dr.**
**Am Lohbach 17**
**D-4134 Rheinberg 4 (DE)**

(74) Vertreter: **Lindner, Wolfgang, Dr.**
**Alexander-von-Humboldt-Strasse**
**D-45896 Gelsenkirchen (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 433 574 B1

**Beschreibung**

Die Erfindung betrifft neue Mittel zum temporären Schutz von Oberflächen, insbesondere von Lacken.

Lackierte Maschinen oder Maschinenteile, insbesondere neue Kraftfahrzeuge werden für Transport und Lagerung bis zur Auslieferung an den Kunden mit einem temporären Schutzüberzug versehen. Hierbei handelt es sich entweder um ein in benzinischer Lösung bzw. in Emulsion oder Dispersion auf die Wagen aufgesprühtes Spezialwachs oder um eine Polymerbeschichtung, bevorzugt auf der Basis von Acrylaten.

Leider lassen sich diese Beschichtungen aber nur sehr schwer wieder entfernen. So müssen die wachshaltigen Schutzüberzüge mit benzin- oder petroleumhaltigen Mitteln, die Polymerüberzüge in der Wärme mit Alkali-Lösungen entfernt werden. Abgesehen von dem erheblichen Arbeitsaufwand benötigt man besondere Anlagen zur Neutralisation der Abwässer bzw. der Wiedergewinnung der eingesetzten Lösungsmittel.

Darüberhinaus stellt insbesondere bei den Polymerbeschichtungen die Einhaltung bestimmter Schichtdicken ein weiteres Problem dar, da ab einer gewissen Schichtdicke nach mehrmonatiger Bewitterung die Schutzschicht so verhärtet, daß sie fast nicht mehr abzulösen ist.

Es ist demnach die Aufgabe der Erfindung, umweltfreundliche Mittel zum temporären Schutz von Oberflächen, insbesondere zum Transport- oder Lagerungsschutz von neuen Kraftfahrzeugen bereitzustellen, die sich problemlos applizieren und in einfacher Weise, möglichst mit üblichen Waschverfahren wieder entfernen lassen, die aber dennoch einen ausreichenden temporären Schutz gewährleisten.

Die Lösung der Aufgabe erfolgt durch Mittel gemäß der Ansprüche 1 bis 6.

Es wurde gefunden, daß wäßrige Dispersionen, die ein Tonmineral aus der Gruppe der Smectite und Fluortensid enthalten, als Mittel zum temporären Schutz von Oberflächen, insbesondere als Transport- und Lagerungsschutz von neuen Kraftfahrzeugen geeignet sind.

Die Mittel lassen sich sehr leicht, z. B. im Spritzverfahren applizieren. Besondere Vorsichtsmaßnahmen hinsichtlich einer speziellen Schichtdicke sind nicht notwendig. Nach dem Trocknen bildet sich auf der mit den erfindungsgemäßen Mitteln behandelten Oberfläche eine seidenmatte, griffeste Schutzschicht. Diese Schicht ist auch unter extremen Witterungsbedingungen wie starker Sonneneinstrahlung und ergiebigem Regen beständig und schützt sowohl Lackals auch Chrom-, Kunststoff- und Gummioberflächen.

Die gewünschte Entfernung dieser Schutzschicht hingegen ist mit einfachen Mitteln möglich. Entweder mit einem Hochdruckwasserspritzgerät oder einem Dampfstrahlgerät ohne Zusatz irgendwelcher Mittel oder durch normale Wäsche unter Zuhilfnahme üblicher Tenside. Dadurch ist es möglich, die Entkonservierung z. B. in einer üblichen Autowaschanlage durchzuführen. Eine Belastung der Umwelt tritt dadurch nicht ein.

Diese einfache Entfernung ist besonders dort erwünscht, wo das gelagerte Produkt auf einem Freigelände bereitgestellt und für den Abholer kurzfristig betriebsbereit hergerichtet werden soll , wie dies z. B. in manchen Automobilwerken mit vielen Kraftfahrzeugen der Fall ist.

Die erfindungsgemäßen Mittel sind im einfachsten Fall wäßrige Dispersionen, die lediglich ein Tonmineral aus der Gruppe der Smectite und ein Fluortensid enthalten, wobei das Tonmineral in einer Menge von 1 bis 7,5 Gew.-%, bevorzugt von 1,5 bis 5 Gew.-% und Fluortensid in einer Menge von 0,05 bis 0,75 Gew.-%, bevorzugt 0,1 bis 0,5 Gew.-% enthalten sind.

Die eingesetzten Tonmineralien sind in wäßriger Dispersion verdickend wirkende Schichtsilicate aus der Gruppe der Smectite wie z. B. Montmorillonit, Wolchonskoit, Hectorit, Beidellit, Nontronit, Saponit, Sauconit, Pimelit oder Medmontit. Bevorzugtes Tonmineral ist Hectorit. Die Mineralien können ihre natürliche Zwischenschicht-Kationen enthalten. Die Kationen können aber auch gegen andere anorganische und insbesondere organische Kationen wie z. B. organische Ammoniumionen ausgetauscht sein. Derartig, aber auch durch Behandlung mit anderen Chemikalien wie z. B. Acrylsäurederivaten modifizierte Tonmineralien sind handelsübliche Produkte und z. B. unter der Bezeichnung Bentone® als feinteilige Pulver oder mit Wasser oder mit einem wasserhaltigen Lösemittel angepastet erhältlich.

Fluortenside sind handelsübliche Tenside, die als hydrophobe Gruppe einen Perfluoralkylrest tragen. Beispiele hierfür sind Produkte, die den folgenden chemischen Aufbau aufweisen: $F_{17}C_8\text{-}SO_3^-K^+$, $F_{17}C_8\text{-}CONR_2$, $[F_{25}C_{12}\text{-}SO_3]^\ominus[N(Alk)_4]^\oplus$ . Sie bewirken bereits in äußerst geringer Konzentration eine Benetzung der mit dem erfindungsgemäßen Mittel behandelten Oberfläche und sie verstärken die hydrophobierende Wirkung des Schutzüberzuges.

Eine weitere Hydrophobierung und damit Erhöhung der Schutzwirkung kann durch Zusatz geringer Mengen (bis 5 Gew.-%) eines hydrophoben Materials erfolgen. Beispiele für derartige Materialien sind Paraffine oder Wachse, die entweder in Alkohol gelöst oder in mikronisierter Form eingesetzt werden, aber auch Vaseline oder Teflonpulver.

Außer den beiden Hauptkomponenten und Wasser können die erfindungsgemäßen Mittel weitere Zusatzstoffe enthalten. Beispiele hierfür sind weitere anorganische Materialien wie z. B. Kreide, Clays,

2

Talkum, Titandioxid oder Lithopone die einzeln oder im Gemisch in Mengen bis zu 10 Gew.-%, bevorzugt bis zu 5 Gew.-% eingesetzt werden können. Diese Mineralien bewirken eine Verstärkung der Schutzschicht gegen eventuelle Schadstoffe im Regenwasser oder in Vogelexkrementen.

Weiterhin können die Mittel bis zu 30 Gew.-% eines niedrigsiedenden einwertigen Alkohols wie Methanol, Ethanol oder Isopropanol enthalten, dessen Aufgabe es ist, das Abtrocknen der applizierten Mittel zu beschleunigen.

Durch die Zugabe von bis zu 5 Gew.-% eines oder mehrerer mehrwertiger Alkohole wie z. B. Glykol, Glycerin oder eines Polyols auf der Basis eines Polyethers oder Polyesters wird eine Plastifizierung des erfindungsgemäßen Mittels erreicht. Der getrocknete Schutzfilm erhält durch diese nicht verdunstenden mehrwertigen Alkohole eine Verminderung der Sprödigkeit.

Die Herstellung der Mittel erfolgt in einfacher Weise durch Einrühren der einzelnen Komponenten in Wasser oder in ein Gemisch aus Wasser und einem Alkohol mit einem schnellaufenden Rührgerät, bevorzugt einem Dissolver. Dabei entstehen hochviskose bis pastöse Mittel die lagerfähig sind und die bei Gebrauch auf den zu schützenden Gegenstand so aufgebracht werden, daß dessen Oberfläche bedeckt ist.

Beispiele

In einem Dissolver werden bei Raumtemperatur Mittel gemäß der folgenden beispielhaften Rezepturen homogen gemischt.

Das eingesetzte Fluortensid entspricht in seinem Aufbau der Formel $[F_{17}C_8SO_3]^{\ominus}[N(C_2H_5)_4]^{\oplus}$.

Die Mengenangaben sind jeweils Gewichtsteile.


## Rezeptur 1

| | |
|---|---|
| Modifizierter Hectorit (Bentone® EW) | 2,0 |
| Fluortensid | 0,2 |
| Glycerin | 3,0 |
| Wasser | 94,8 |


## Rezeptur 2

| | |
|---|---|
| Modifizierter Hectorit (Bentone® LT) | 2,0 |
| Fluortensid | 0,25 |
| Glycerin | 3,0 |
| Spiritus | 10,0 |
| Wasser | 84,75 |


## Rezeptur 3

| | |
|---|---|
| Modifizierter Hectorit (Bentone® EW) | 3,0 |
| Fluortensid | 0,2 |
| Kreidepulver | 2,0 |
| Aluminiumsilikat | 0,5 |
| Glykol | 2,0 |
| Wasser | 92,3 |

Rezeptur 4

| | |
|---|---|
| Modifizierter Hectorit (Bentone® EW) | 3,0 |
| Fluortensid | 0,15 |
| Mikronisiertes PP-Wachs | 1,5 |
| Polyethylenglykol | 2,0 |
| Wasser | 93,35 |

Rezeptur 5

| | |
|---|---|
| Modifizierter Hectorit (Bentone® EW) | 2,0 |
| Fluortensid | 0,15 |
| Vaseline | 2,0 |
| Wasser | 95,85 |

Die so hergestellten Mittel werden auf lackierte Bleche aufgesprüht, so daß diese ganz mit den Mitteln bedeckt sind. Danach werden sie an der Luft getrocknet. Ein Teil der so geschützten Bleche wird der Freilandbewitterung ausgesetzt. Nach sechswöchiger Bewitterung ist die Schutzschicht noch einwandfrei.

Ein zweiter Teil der Bleche wird unter stark fließendem Wasser gelagert. Nach 8 h ist die Schutzschicht noch einwandfrei.

Die Schicht läßt sich nach beiden Lagerungen mittels Wasser und einem Schwamm oder einer Bürste leicht entfernen. Die darunterliegende Lackschicht ist nicht angegriffen.

**Patentansprüche**

1. Mittel zum temporären Schutz von Oberflächen, **dadurch gekennzeichnet,** daß sie ein Tonmineral aus der Gruppe der Smectite und ein Fluortensid in einer wäßrigen Dispersion enthalten.

2. Mittel nach Anspruch 1, **dadurch gekennzeichnet,** daß die Kationen der Zwischenschichten des Tonminerals gegen organische Kationen ausgetauscht sind.

3. Mittel nach den Ansprüchen 1 und 2, **dadurch gekennzeichnet,** daß das Tonmineral Hectorit ist.

4. Mittel nach den Ansprüchen 1 bis 3, **dadurch gekennzeichnet,** daß sie zusätzlich weitere anorganische Mineralien, niedrigsiedenden einwertigen Alkohol und/oder mehrwertigen Alkohol enthalten.

5. Mittel nach den Ansprüchen 1 bis 4, **dadurch gekennzeichnet,** daß sie zusätzlich Paraffin, Wachs oder Teflonpulver enthalten.

6. Mittel nach den Ansprüchen 1 bis 5, **dadurch gekennzeichnet,** daß sie folgende Zusammensetzung haben

```
Tonmineral aus der
Gruppe der Smectite          1,5 bis  5   Gew.-%
Mineralische Füllstoffe      0   bis  5   Gew.-%
einwertiger Alkohol          0   bis 30   Gew.-%
mehrwertiger Alkohol         0   bis  5   Gew.-%
Fluortensid                  0,1 bis  0,5 Gew.-%
Paraffin oder Wachs          0   bis  5   Gew.-%
Wasser                       98,4 bis 49,5 Gew.-%
```

## Claims

1. Agents for the temporary protection of surfaces, **characterized in that** they contain a clay mineral of the smectite group and a fluorosurfactant in an aqueous dispersion.

2. Agents according to Claim 1, **characterized in that** the cations of the intermediate layers of the clay mineral are exchanged for organic cations.

3. Agents according to Claims 1 and 2, **characterized in that** the clay mineral is hectorite.

4. Agents according to Claims 1 to 3, **characterized in that** they additionally contain further inorganic minerals, low-boiling monovalent alcohol and/or multivalent alcohol.

5. Agents according to Claims 1 to 4, **characterized in that** they additionally contain paraffin, wax or teflon powder.

6. Agents according to Claims 1 to 5, **characterized in that** they have the following composition:

| clay mineral from the smectite group | 1•5 to 5 % by weight |
|---|---|
| mineral fillers | 0 to 5 % by weight |
| monovalent alcohol | 0 to 30 % by weight |
| multivalent alcohol | 0 to 5 % by weight |
| fluorosurfactant | 0•1 to 0•5 % by weight |
| paraffin or wax | 0 to 5 % by weight |
| water | 98•4 to 49•5 % by weight. |

## Revendications

1. Agents pour la protection temporaire de surfaces, caractérisés en ce qu'ils contiennent un minéral argileux du groupe des smectites et un agent de surface fluoré en dispersion aqueuse.

2. Agents selon la revendication 1, caractérisés en ce que les cations des couches interfoliaires du minéral argileux sont échangés contre des cations organiques.

3. Agents selon les revendications 1 et 2, caractérisé en ce que le minéral argileux est l'hectorite.

4. Agents selon les revendications 1 à 3, caractérisés en ce qu'ils contiennent en outre des minéraux inorganiques additionnels, un monoalcool de bas point d'ébullition et/ou un polyalcool.

5. Agents selon les revendications 1 à 4, caractérisés en ce qu'ils contiennent en outre de la paraffine, de la cire ou de la poudre de téflon.

6.   Agents selon les revendications 1 à 5, caractérisés en ce qu'ils ont la composition suivante :

| | |
|---|---|
| Minéral argileux du groupe des smectites | 1,5 à 5% en poids |
| Matières de charge minérales | 0 à 5% en poids |
| Monoalcool | 0 à 30% en poids |
| Polyalcool | 0 à 5% en poids |
| Agent de surface fluoré | 0,1 à 0,5% en poids |
| Paraffine ou cire | 0 à 5% en poids |
| Eau | 98,4 à 49,5% en poids |